## Europäisches Patentamt

## European Patent Office

## Office européen des brevets

(19)

(11) Veröffentlichungsnummer: **0 299 932**
**A1**

# (12) EUROPÄISCHE PATENTANMELDUNG

(21) Anmeldenummer: **88830291.6**

(22) Anmeldetag: **08.07.88**

(51) Int. Cl.⁴: **A 01 M 29/02**
H 03 K 3/023, B 06 B 1/02

(30) Priorität: **16.07.87 IT 4818687**

(43) Veröffentlichungstag der Anmeldung:
**18.01.89 Patentblatt 89/03**

(84) Benannte Vertragsstaaten:
**AT BE CH DE ES FR GB GR LI LU NL SE**

(71) Anmelder: **Alfano, Giuseppa**
**Viale Marx, no. 3**
**I-00156 Roma (IT)**

(72) Erfinder: **Alfano, Giuseppa**
**Viale Marx, no. 3**
**I-00156 Roma (IT)**

(74) Vertreter: **Sneider, Massimo**
**Studio Lenzi Via Lucania 13**
**I-00187 Roma (IT)**

(54) **Elektronische Apparatur, besonders geeignet für die Rattenvertilgung.**

(57) Die erfindungsgemässe besonders für die Rattenbekämpfung geeignete Elektronik , d.h. elektronische Apparatur , besteht aus einer integrierten Schaltung (4), die ein in der Zeit veränderliches elektrisches Signal erzeugt . Dieses Signal wird einer zweiten integrierten Schaltung (5) zugesendet , welche als Teiler wirkt und an ihrem Ausgang eine Frequenz verursacht , welche obwohl dieselben Merkmale habend Pegeländerungen aufweist , indem die beiden Wellenformen z.B. eine impulsiver Art und eine quadratischer Art sind .

EP 0 299 932 A1

Bundesdruckerei Berlin

## Beschreibung

**"Elektronische Apparatur , besonders geeignet für die Rattenvertilgung ."**

Es ist bekannt , dass die Anwesenheit von manchmal auch sehr zahlreichen Mäusen eines der Probleme ist , welche sowohl viele Wohnungen als auch Schuppen , Lebensmittellager und Magazine im allgemeinen in höherem Masse betrüben . Wie wohl bekannt ist , ausser sehr häufig Schäden , Verschmutzungen und andere ähnliche Übelstände zu verursachen , sind die Mäuse in der Tat Träger zahlreicher Krankheiten , weshalb deren Anwesenheit und deren Zuwachs mit den wirkungsvollsten Mitteln zu bekämpften ist .

Bis vor einigen Jahren waren die Gifte und die Fallen die alleinigen Methoden , mit denen es möglich war die Mäuse zu bekämpfen , aber es ist offensichtlich , dass solche Methoden angesichts ihrer Gefährlichkeit und des gegenwärtigen Standes von technischen und zoologischen Kenntnissen absolut unangemessen erscheinen .

In bezug auf die beschriebenen Methoden hatte man einen ersten Fortschritt mit der Schaffung von entrattenden Apparaten , welche für deren Betrieb die Ausstrahlung von komplexen Signalen unter Form von Ultra schällen benutzen , d.h. von Schällen einer Frequenz über der Empfindlichkeitsgrenze des menschlichen Gehörs , welche vom Menschen unter Form eines Zischens sehr hoher Frequenz wahrgenommen werden , wobei diese Signale di Mäuse belästigen und dabei fliehen lassen , jedoch auch am Gleichgewichtssystem der Schnecke und des menschlichen Ohrs im allgemeinen ein Übelsein bewirken , indem Verwirrungen , Brechneigungen , usw. verursacht werden .

Der Gegenstand der vorliegenden Erfindung ist eine Apparatur für die Rattenvertilgung , welche für deren Betrieb die Übertragung von für die Mäuse lästigen Signalen unter Form von Rundfunkwellen benutzt und welche jedoch die vorerwähnten Übelstände nicht bewirkt .

Der erfindungsgemässe Apparat ergibt sich im wesentlichen aus einem Generator elektromagnetischer Wellen zu bestehen , welche manipuliert werden , indem vom ursprünglichen Signal unterschiedliche Wellenformen erhalten werden ; diese Wellen werden danach in einem ersten Stadium verstärkt , und auf den Leistungpegel weiter verstärkt una danach auf dem Ätherweg unter Form von Rundfunkwellen übertragen , welche letztere die Mäuse unter Interferenz in deren Nervensystem belästigen und dadurch die Flucht derselben bewirken .

Was bisher kurzgefasst behauptet wird unter Bezug nahme auf die anliegende Zeichnung aus der nachstehenden eingehenden Beschreibung verständlicher sein . In der Zeichnung selbst zeigen :

Fig.1 ein Blockschema der in Frage stehenden Apparatur ;

Fig.2 das Schema einer bevorzugten Verwirklichung des Apparates .

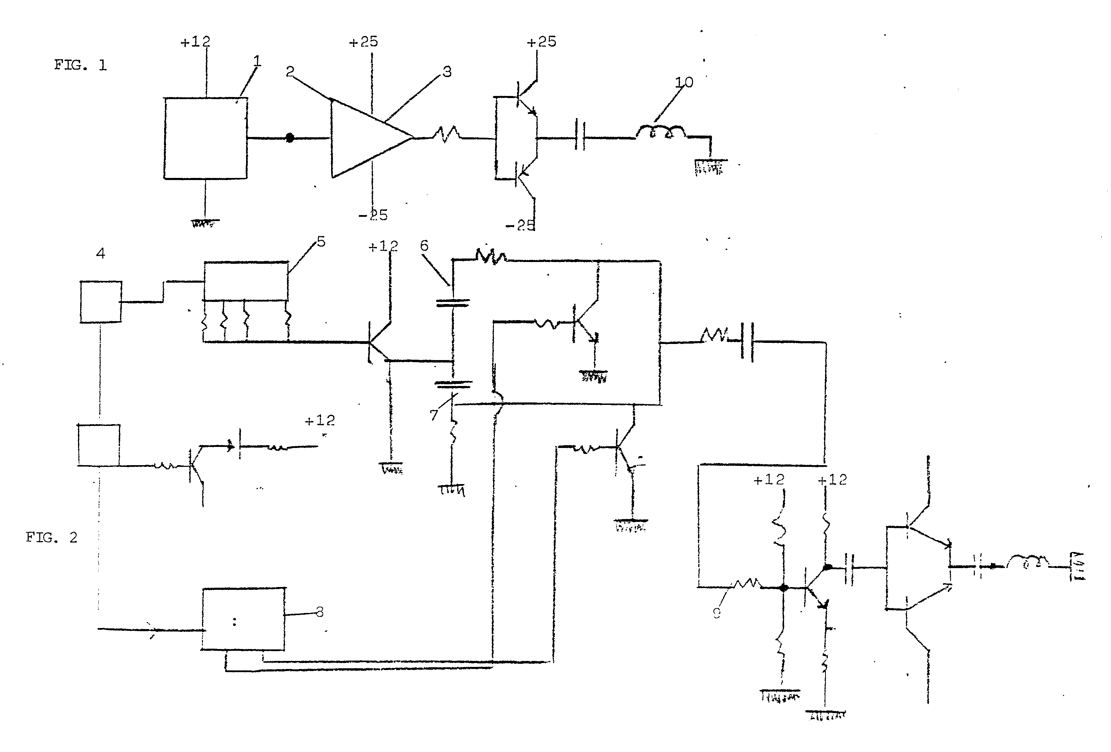

Bezugnehmend auf die Zeichnung und insbesondere auf die Figur 1 die erfindungsgemässe Apparatur ergibt sich aus einem Generator 1 zu bestehen , welcher elektromagnetische Wellen erzeugt , welche um ein weiteres Stadium steuern zu können vom Verstärker 2 und von einem zweiten Verstärker 3 verstärkt werden , von welchem das Signal entnommen und einem Wandler zugesendet wird .

In der Figur 2 ist ein bevorzugtes Verwirklichungssystem der Erfindung gezeigt , welches sich ergibt aus einer integrierten Schaltung 4 zu bestehen , welche ein elektrisches Signal erzeugt . Dieses Signal wird in das Integrierte 5 gesandt , welches ein Teiler ist . Vom Teiler 5 tritt eine Frequenz aus , welche die gleichen Merkmale des Generators hat , jedoch Pegeländerungen einführt , welche entkoppelt werden und vom Original in zwei Wellenformen 6 und 7 weiter modifiziert werden , zum Beispiel eine impulsiver Art und die andere quadratischer Art .

Die beiden Wellenformen werden deshalb gestaltet , weil die Erfahrung zeitigte , dass eine Wellenform die kleinen Mäuse und eine andere Wellenform di grossen Mäuse belästigt .

Die beiden Signale werden alsdann den beiden Transistoren zugeführt . Ein Teiler 8 bewirkt vermittels des Eingangsignals Zeiten , welche abwechselnd eine Wellenform , eine Ruheperiode und , danach , die zweite Wellenform und so sort erzeugen .

Es wurde zum Beispiel herausgefunden , dass sich eine Alternanz von 12 Sekunden Ruhe und vier Sekunden Übertragung als besonders wirkungsvoll erweist .

Die Signale werden danach einem Vorverstärker 9 und anschliessend einem Verstärker zugeführt .

Es ist offensichtlich , dass der Apparat bis hier nur beispielsweise in nicht einschränkender Form beschrieben wurde und dass unter Beibehaltung der Betriebsgrundsätze alle sowohl von der praktischen Anwendung als auch von der Technik des Gebietes auferlegten Abänderungen möglich sind , indem z.B. andere als die beschriebenen Komponenten verwendet werden , welche jedoch gleiche oder ähnliche Funktionen haben .

## Patentansprüche

1.)Elektronische Apparatur , besonders geeignet für die Rattenvertilgung , gekennzeichnet aus einer integrierten Schaltung zu bestehen , welche ein in der Zeit veränderliches elektrisches Signal erzeugt .

2.)Elektronische Apparatur , besonders geeignet für die Rattenvertilgung , nach Anspruch 1 , dadurch gekennzeichnet, dass das von der ersten integrierten Schaltung kommende Signal einer weiten integrierten Schaltung zugesendet wird , welche als Teiler wirkt und an ihrem Ausgang deshalb eine Frequenz verursacht , welche obwohl dieselben Markmale habend Pegeländerungen aufweist .

3.)Elektronische Apparatur , besonders geeignet für die Rattenvertilgung , nach den vorstehenden Ansprüchen , dadurch gekennzeichnet , dass die Pegeländerungen der einmal entkoppelten und weiter modifizierten Wellenform zwei Wellenformen erzeugen , z.B. eine impulsiver Art und eine quadratischer Art .

4.)Elektronische Apparatur , besonders geeignet für die Rattenvertilgung , nach den vorstehenden An sprüchen , dadurch gekennzeichnet , dass die beiden Signale zwei Transistoren zugeführt werden und dass ein Teiler vermittels des Eingangsignals Zeiten bewirkt, welche abwechselnd Übertragung einer Wellenform , Ruhe und Übertragung einer unterschiedlichen Wellenform erzeugen , wobei die Signale danach einem Vorverstärker und anschliessend einem Verstärker zugeführt werden .

5.)Elektronische Apparatur , besonders geeignet für die Rattenvertilgung , nach den vorstehenden Ansprüchen , im wesentlichen wie beschrieben und erläutert .

FIG. 1

FIG. 2

Europäisches Patentamt

**EUROPÄISCHER RECHERCHENBERICHT**

Nummer der Anmeldung

EP 88 83 0291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 466 951 (S.I.R.E.) <br> * Seite 3, Zeile 24 - Seite 12, Zeile 23; Figuren 1-8 * <br> --- | 1,2,5 | A 01 M 29/02 <br> H 03 K 3/023 <br> B 06 B 1/02 |
| X | WO-A-8 602 526 (HI-TEC CONTROL SYSTEMS) <br> * Seiten 3-6; Figur 2 * <br> --- | 1,2,5 | |
| X | WO-A-8 604 485 (BATTELLE-INSTITUT) <br> * Seiten 5-6 * <br> --- | 1,2,4,5 | |
| A | FR-A-2 369 795 (MICRO-SONICS) <br> * Seiten 2-7 * <br> --- | 1,2,5 | |
| A | FR-A-2 375 823 (BADENS) <br> * Seiten 1-3 * <br> --- | 1-3,5 | |
| A | FR-A-2 338 647 (BADENS) <br> * Seiten 2-4 * <br> --- | 1-3,5 | |
| A | US-A-3 872 472 (MOSCHGAT) <br> * Spalten 3-5, Zeilen 1-5; Figuren 1,2 * <br> ----- | 1,2,4,5 | RECHERCHIERTE SACHGEBIETE (Int. Cl.4) <br><br> A 01 M <br> H 03 K <br> B 06 B |

Der vorliegende Recherchenbericht wurde für alle Patentansprüche erstellt

| Recherchenort | Abschlußdatum der Recherche | Prüfer |
|---|---|---|
| DEN HAAG | 12-09-1988 | VERMANDER R.H. |